Europäisches Patentamt

European Patent Office

Office européen des brevets

(19)

(11) Veröffentlichungsnummer : **0 317 875 B1**

(12) # EUROPÄISCHE PATENTSCHRIFT

(45) Veröffentlichungstag der Patentschrift :
**12.02.92 Patentblatt 92/07**

(51) Int. Cl.⁵ : **B01D 53/36,** B01J 23/30,
B01J 23/85, C01G 23/07

(21) Anmeldenummer : **88119000.3**

(22) Anmeldetag : **15.11.88**

(54) **Katalysator zur selektiven Reduktion von Stickoxiden mit Ammoniak.**

(30) Priorität : **27.11.87 DE 3740289**

(43) Veröffentlichungstag der Anmeldung :
**31.05.89 Patentblatt 89/22**

(45) Bekanntmachung des Hinweises auf die
Patenterteilung :
**12.02.92 Patentblatt 92/07**

(84) Benannte Vertragsstaaten :
**AT BE CH DE FR GB IT LI LU NL SE**

(56) Entgegenhaltungen :
**DE-A- 2 458 888
CHEMICAL ABSTRACTS, Band 108, Nr. 8, Februar 1988, Zusammenfassung Nr. 58873b, Columbus, Ohio, US**

(73) Patentinhaber : **Degussa Aktiengesellschaft
Weissfrauenstrasse 9
W-6000 Frankfurt am Main 1 (DE)**

(72) Erfinder : **Brand, Reinhold, Dr.
Gustav-Adolf-Strasse 25
W-6450 Hanau (DE)**
Erfinder : **Engler, Bernd H., Dr.
Treuener Strasse 2
W-6450 Hanau 9 (DE)**
Erfinder : **Honnen, Wolfgang, Dr.
Am Heinichenberg 38
W-6454 Bruchköbel (DE)**
Erfinder : **Kleine-Möllhoff, Peter
Freigerichter Strasse 82 a
W-8755 Alzenau (DE)**
Erfinder : **Koberstein, Edgar, Dr.
Wolfskernstrasse 8
W-8755 Alzenau (DE)**

## Beschreibung

Die Erfindung betrifft einen bezüglich Herstellbarkeit, Wirkung und Haltbarkeit verbesserten Katalysator zur selektiven Reduktion von in sauerstoffhaltigen Abgasen, z.B. Rauchgasen von Kraftwerken, enthaltenen Stickstoffoxiden mit Ammoniak auf der Basis eines innigen Gemisches aus den aktiven Komponenten

A) Titan und

B) Wolfram sowie Vanadium, Eisen, Niob und/oder Molybdän,

jeweils in Form von Oxiden der genannten Metalle, mit einem Atomverhältnis zwischen den Komponenten der Metalle A) und B) von 1 : 0,001 bis 1, vorzugsweise 1 : 0,003 bis 0,3.

Katalysatoren mit diesen Grundstoffen und ähnlichen Atomverhältnissen sind Gegenstand der DE-PS 24 58 888. Bei diesen bekannten Katalysatoren ist wesentlich, daß die Komponenten A) und B) als inniges Gemisch in Form ihrer Oxide erhalten werden können. Gemäß genannter Patentschrift wird diese Aufgabe gelöst, indem das Titanoxid in Form einer seiner chemischen Vorstufen, wie Titanhydroxid, Titansalz oder Titansäure zum Einsatz kommt und diese Vorstufe mit löslichen oder gefällten Verbindungen der Metalle der Komponente B) kombiniert und dann durch Pyrolyse zu der gewünschten Oxidmasse weiterverarbeitet wird.

Es wurde nun gefunden, daß gleichwertige oder überlegene Katalysatorformulierungen der grundsätzlich bekannten Art einfacher zugänglich werden, wenn die Komponente A) in Form eines flammenhydrolytisch aus Titantetrachlorid gewonnenen Oxids zum Einsatz kommt.

Gegenstand der Erfindung ist demgemäß ein Katalysator zur selektiven Reduktion von Stickstoffoxiden mit Ammoniak aus einem innigen Gemisch von mindestens drei Metallen in Form ihrer Oxide, nämlich

A) Titan als Komponente A),

$B_1$) Wolfram als erste Komponente B) und

$B_2$) mindestens einem der Metalle Vanadium, Eisen, Niob, Molybdän, als zweite Komponente B)

mit einem Atomverhältnis zwischen den Metallen der Komponenten A) und B) von 1 : 0,001 bis 1, vorzugsweise 1 : 0,003 bis 0,3. Der Katalysator ist dadurch gekennzeichnet, daß die Komponente A) in Form eines durch Flammenhydrolyse von Titantetrachlorid erhältlichen feinteiligen Oxids mit den Eigenschaften

| | | |
|---|---|---|
| BET-Oberfläche | $m^2/g$ | 50 ± 15 |
| mittlere Größe der Primärteilchen | nm | 30 |
| Stampfdichte[1] | g/l | ca. 150 |
| Trocknungsverlust[2] (2 Stunden bei 105°C) | Gew.% | 1,5 |
| Glühverlust[2][4] (2 Stunden bei 1000°C) | Gew.% | 2 |
| pH-Wert[3] (in 4%iger wäßriger Dispersion) | | 3 - 4 |
| Röntgenstruktur | | überwiegend Anatas |
| isoelektrischer Punkt bei pH-Wert | | 6,6 |
| Dichte | $g/cm^3$ | 3,8 |
| $Al_2O_3$[5] | Gew.% | 0,3 |
| $TiO_2$[5] | Gew.% | 99,5 |
| $SiO_2$[5] | Gew.% | 0,2 |
| $Fe_2O_3$[5] | Gew.% | 0,01 |
| HCl[5][6] | Gew.% | 0,3 |

[1] nach DIN 53 194 oder ISO 787/XI  
[2] nach DIN 55 921 oder ISO 787/II bzw. ASTM D 280 - 33 (Trocknungsverlust) und ASTM D 1208 - 65 (Glühverlust)  
[3] nach DIN 53 200 oder ISO 787/IX bzw. ASTM D 1208 - 65  
[4] bez. auf die 2 Stunden bei 105°C getr. Substanz  
[5] bez. auf die 2 Stunden bei 1000°C gegl. Substanz  
[6] HCl-Gehalt ist Bestandteil des Glühverlustes

vorliegt und der Katalysator erhältlich ist durch Imprägnieren des genannten Titandioxids mit Lösungen von Salzen der Metalle der Gruppe B), Trocknen und Kalzinieren bei 100 - 650, vorzugsweise 300 - 600° C.

Ein hervorragend geeignetes Titandioxid ist das von der Anmelderin unter der Bezeichnung Titandioxid P 25 hergestellte und vertriebene hochdisperse Produkt. Es hat eine große spezifische Oberfläche und ein sehr enges Korngrößenspektrum mit einer mittleren Größe der Primärteilchen von 30 nm und liegt zum überwiegenden Teil in Anatasform und zu einem geringeren Teil in Rutilform vor, weist also Anteile beider Kristallmodifikationen auf.

Der erfindungsgemäße Katalysator kann als Trägerkatalysator oder Vollkatalysator ausgebildet sein.

Nach der erstgenannten Anwendungsform ist er als Überzug auf einem im wesentlichen inerten, strukturell verstärkenden Träger aus Keramik oder Metall aufgebracht

Geeignete Trägermaterialien sind Keramikkörper aus z.B. α-Aluminiumoxid, Mullit, Cordierit, Zirkonmullit, Bariumtitanat, Porzellan, Thoriumoxid, Steatit, Borcarbid, Siliziumcarbid, Siliziumnitrid oder Metallkörper aus Edelstahl oder sog. Heizleiterlegierungen (Cr/Fe/Al-Legierungen).

Die Trägerkatalysatoren sind nach verschiedenen vorteilhaften Methoden erhältlich, die aus den Ansprüchen 3 bis 6 hervorgehen. Für die Vollkatalysatoren haben sich die aus den Ansprüchen 6 bis 8 hervorgehenden Methoden als sehr günstig erwiesen.

Die Beschichtung von inerten, strukturellen Verstärkern mit Titandioxid kann nach dem sog. Washcoat-Verfahren erfolgen. Hierfür können wäßrige Suspensionen mit einem Feststoffgehalt zwischen 5 und 60 Gew.% eingesetzt werden.

Für die einzelnen Metalle der Gruppe B) können Lösungen z. B. folgender Salze eingesetzt werden: Ammonium-para- oder -meta-Wolframat, Wolframhalogenide, Wolframsäure, Ammoniummetavanadat, Vanadyloxalat, Vanadylhalogenide, Eisenchlorid, Eisensulfat, Eisennitrat, Eisenhydroxid, organische Eisensalze, Nioboxidhydrat, Nioboxalat sowie Ammoniummolybdat und Molybdänhalogenide. Alle im Rahmen der Herstellung von Trägerkatalysatoren angewandten Trocknungsmaßnahmen bewegen sich im Temperaturbereich von 20 - 400° C.

Wenn eine mit den Salzlösungen der metalle der Komponente B) versetze wäßrige Titandioxidsuspension sprühgetrocknet werden soll, so kann dies in üblichen Sprühtrocknungsapparaten erfolgen. Üblicherweise verwendete Trocknungstemperaturen sind: 150 - 550° C.

Bei der Fertigung der Vollkatalysatoren werden neben der sprühgetrockneten Katalysatormasse noch eine Reihe von Zuschlagstoffen benötigt. So können als Befeuchtungsmittel Wasser, Ethanol, Salmiaklösung, Ethanolamin eingesetzt werden. Als Stützstoffe kommen z. B. Glasfasern in Betracht.

Geeignete Bindemittel, welche dazu dienen, der herzustellenden Paste nach Verformung im Zustand des sog. Grünkörpers genügende Stabilität zu verleihen, sind z.B. Zellulosederivate. Um ein Verpressen oder Extrudieren zu erleichtern, werden als Verformungshilfsmittel z. B. Bentonite, Tonerden, organische Säuren eingesetzt.

Schließlich kann auch die Porosität der Vollkatalysatoren durch Zusatz geeigneter Porenbildner gesteuert werden, welche sich bei den vorgesehenen Kalzinier- oder Tempervorgängen unter Gasentwicklung zersetzen. Solche Substanzen sind z. B. feinteilige Kohlen oder Holzschliff.

Als Füllstoffe können zusätzlich Kieselsäuren (inklusive gefällte und pyrogen hergestellte), Aluminiumoxid, Alumosilikate, Porzellane, bis ca. 50 Gew.%, bezogen auf die Gewichtssumme aller Bestandteile des fertigen Katalysators eingesetzt werden.

Zum Verkneten der Ausgangsstoffe zu einer homogenen Paste werden Knetaggregate, z.B. ein Schaufelkneter, verwendet.

Die erfindungsgemäßen Katalysatoren zeichnen sich durch hohe Aktivität, Selektivität und Dauerstandsfestigkeit aus, was dafür spricht, daß das in der DE-C-24 58 888 als Wesentlich herausgestellte Kriterium für das Zustandekommen einer innigen Mischung zwischen den Katalysatorkomponenten auch bei einem Vorgehen gemäß der Erfindung erfüllt wird. Die Anwendungsform der neuen Katalysatoren als Träger- oder Vollkatalysatoren schafft eine vergrößerte Anwendungsbreite als sie die bislang bekannten Systeme ermöglichten. Insbesondere lassen sich die Katalysatoren als hervorragend wirksame und sehr feinzellige Trägerkatalysatoren in Monolithform fertigen.

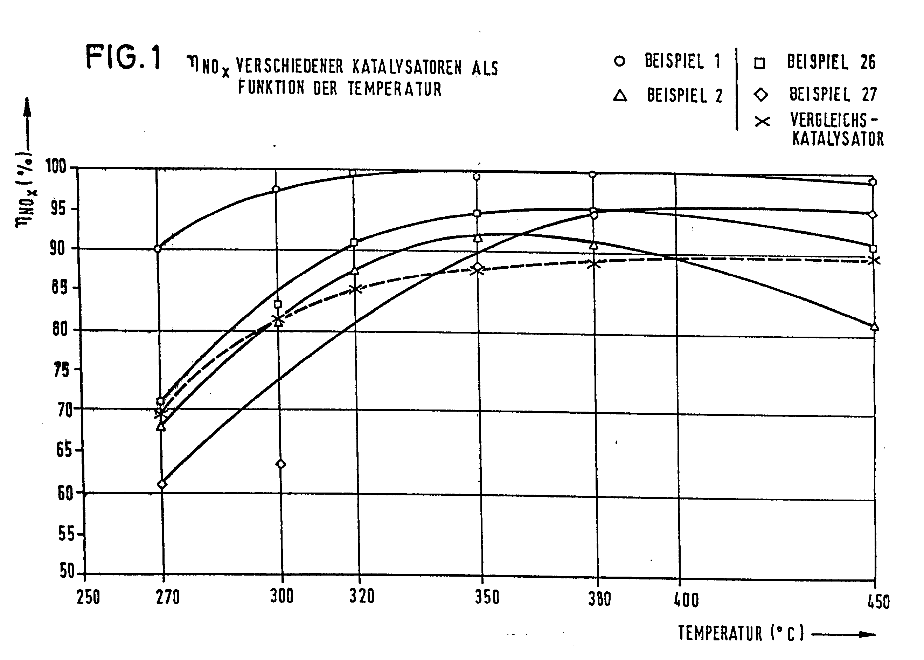

Die Erfindung wird nachfolgend in Verbindung mit der Zeichnung weiter erläutert. In der Zeichnung zeigen Figur 1 Abhängigkeit der $NO_x$-Konversion $\eta_{NOx}$ verschiedener erfindungsgemäßer Katalysatoren als Funktion der Temperatur und

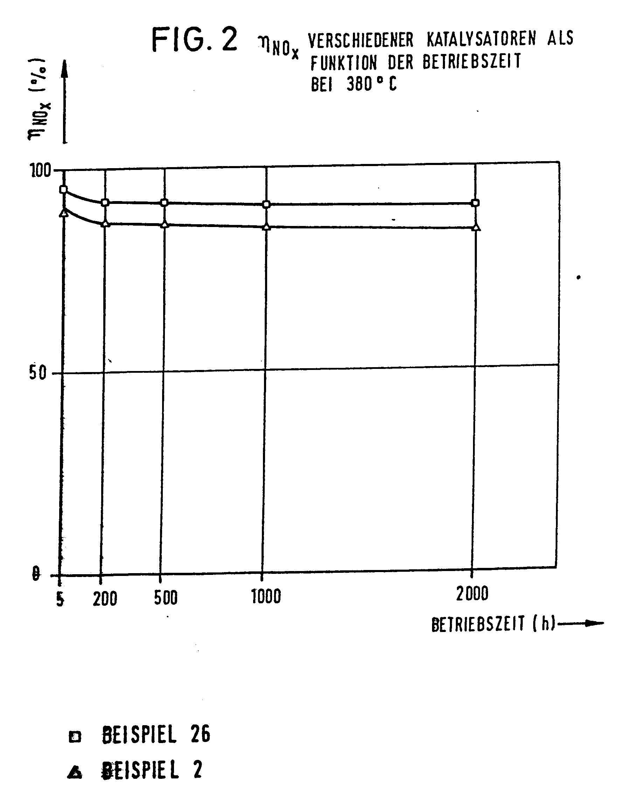

Figur 2 die Abhängigkeit der $NO_x$-Konversion $\eta_{NOx}$ verschiedener erfindungsgemäßer Katalysatoren als Funktion der Betriebszeit bei 380° C.

Beispiel 1

10 kg des in Anspruch 1 genannten Titandioxids werden in 35 l entsalztem Wasser eingerührt. Die so erhaltene Suspension wird unter fortgesetztem Rühren mit 250 ml Salpetersäure der Dichte 1,39 g/cm³ versetzt.

Die Beschichtung eines Wabenkörpers mit Kanälen von quadratischem Querschnitt mit der Zellteilung (1 Steg + 1 Öffnung) von ca. 2,0 mm erfolgt durch Eintauchen des keramischen Trägers in die wäßrige Titanoxidsuspension.

Im Anschluß an den Tauchschritt werden die Kanäle des monolithischen Trägers mit Preßluft freigeblasen und anschließend bei 150° C im Luftstrom getrocknet.

Dieser Vorgang wird solange wiederholt (2 - 4 mal), bis ca. 160 g Titanoxid pro Kubikdezimeter Trägervolumen aufgebracht sind. Die beschichteten und getrockneten Wabenkörper werden bei 550° C zwei Stunden getempert.

Eine der Wasseraufnahmekapazität des beschichteten Trägers entsprechende Menge Lösung von Ammoniummetawolframat (entsprechend 5 g $WO_3$ pro 100 g Titandioxid) und Vanadiumoxalat (entsprechend 5 g $V_2O_5$ pro 100 g Titandioxid) in Wasser werden durch Imprägnierung aufgebracht.

Die Trocknung des Katalysators erfolgt unter Frischluftdurchströmung des Wabenkörpers bei 150° C. Anschließend wird bei 550° C zwei Stunden getempert.

Beispiele 2 - 14

Entsprechend dem in Beispiel 1 beschriebenen Verfahren werden die in Tabelle 1 aufgeführten Katalysa-

4

toren präpariert.

Nioboxid wird als Nioboxalat, Eisen als Eisen(III)-nitrat und Molybdän als Ammoniummolybdat in wäßriger Lösung eingesetzt.

Tabelle 1

| Beispiel | $V_2O_5$ * | $Fe_2O_3$ * | $Nb_2O_5$ * | $MoO_3$ * | $WO_3$ * |
|----------|-----------|------------|------------|----------|---------|
| 2 | 1,0 | - | - | - | 9,0 |
| 3 | 2,5 | | | | 2,5 |
| 4 | 0,5 | - | - | - | 9,5 |
| 5 | 5 | - | - | - | - |
| 6 | 5 | 5 | - | - | - |
| 7 | 5 | 2 | - | - | 5 |
| 8 | 5 | - | 5 | - | - |
| 9 | 5 | - | 2 | - | 5 |
| 10 | 5 | - | - | 2 | 5 |
| 11 | - | 5 | - | - | - |
| 12 | - | 5 | - | 6,6 | 5 |
| 13 | - | - | - | 5 | 5 |
| 14 | - | - | 5 | 5 | - |

\* Alle Angaben sind in Gramm Metalloxid pro 100 g Titanoxid

Beispiel 15

Die Beschichtung des Trägers mit Titandioxid erfolgt wie in Beispiel 1 beschrieben.

5 g Eisenoxid pro 100 g Titandioxid werden durch Imprägnierung des beschichteten Trägers mit einer Lösung von Eisennitrat in einer der Wasseraufnahmekapazität des Wabenkörpers entsprechenden Menge Wassers aufgebracht. Die Trocknung erfolgt unter Luftdurchströmung bei 150° C.

Anschließend wird bei 450° C 30 Minuten getempert. Nach Abkühlen der Probe werden 5 g Molybdänoxid pro 100 g Titandioxid durch Imprägnieren mit einer wäßrigen Lösung von Ammoniumheptamolybdat entsprechend dem oben für die Eisen-Einbringung beschriebenen Verfahren aufgebracht.

Die Trocknung erfolgt unter Luftdurchströmung bei 150° C. Die abschließende Temperung wird bei 550° C 2.5 Stunden durchgeführt.

Beispiele 16 - 18

Entsprechend dem in Beispiel 15 beschriebenen Verfahren werden die in Tabelle 2 aufgeführten Katalysatoren präpariert.

Als erste Komponente wird Wolframoxid und als zweite Komponente Vanadiumoxid auf den $TiO_2$-beschichteten, getemperten Träger aufgebracht. Zur Imprägnierung mit Wolfram wird die der Konzentration gemäß Tabelle 2 entsprechende Menge Wolframsäure in siedender Ammoniaklösung gelöst. Die Imprägnierung wird wie in Beispiel 15 beschrieben durchgeführt. Die Zwischentrocknung erfolgt unter Luftdurchströmung eine Stunde bei 250° C.

Die abgekühlte Probe wird mit einer wäßrigen Vanadiumoxalatlösung entsprechend Beispiel 15 imprägniert. Die abschließende Temperung wird bei 600° C 1,5 Stunden lang durchgeführt.

## Tabelle 2

| Beispiel | $V_2O_5$ * | $WO_3$ * |
|----------|------------|----------|
| 16 | 1,25 | 1,25 |
| 17 | 2,5 | 2,5 |
| 18 | 5 | 5 |

\* Alle Angaben sind in Gramm Metalloxid pro 100 g Titanoxid

Beispiele 19 - 21

In einer wäßrigen Lösung von Ammoniumparawolframat wird das in Anspruch 1 genannte Titandioxid suspendiert. Das Atomverhältnis Titan zu Wolfram wird jeweils so gewählt, daß im Produktmischoxid ein Gewichtsverhältnis $TiO_2 : WO_3$ von 9 : 1 vorliegt.

Die Feststoffkonzentration der oben genannten Suspension wird auf 20 Gew.% eingestellt. Durch Zugabe von wäßriger Ammoniaklösung wird in pH-Wert zwischen 8 und 10 eingestellt. Nachfolgend wird die Suspension zwei Stunden bei 60° C gerührt.

Damit ein feinteiliges und homogenes Titan-Wolfram-Oxid-Gemisch entsteht, wird eine Sprühtrocknung mit 550° C heißem Gas im Gegenstromverfahren durchgeführt. Anschließend wird das Sprühkorn eine Stunde bei 650° C kalziniert.

Entsprechend dem in Beispiel 1 beschriebenen Verfahren wird ein Wabenkörper mit 176 g/cm³ Trägervolumen mit dem $TiO_2/WO_3$-Gemisch beschichtet.

Nachfolgend erfolgt die Imprägnierung mit vereinigten (Beispiel 19) oder getrennten (Beispiele 20, 21) Salzlösungen der Metalle der Komponente $B_2$ nach den in den Beispielen 1 - 14 bzw. 15 - 18 beschriebenen Methoden.

Tabelle 3

| Beisp. | Gewichtsverh. $TiO_2/WO_3$ | Kompon. $B_2$ | Anteil $B_2$-Oxid in g/100 g Mischoxid |
|---|---|---|---|
| 19 | 9 : 1 | $V_2O_5$ | 1,0 |
| 20 | 9 : 1 | $Nb_2O_5$ | 1,0 |
| 21 | 9 : 1 | $Mo\ O_3$ | 1,0 |

Beispiele 22 - 25

Entsprechend dem in den Beispielen 19 - 21 beschriebenen Verfahren wird ein Titan-Wolfram-Mischoxid mit dem Gewichtsverhältnis Titandioxid zu Wolframoxid von 9 : 1 hergestellt.

10 kg dieses Mischoxids werden mit einer Lösung von Ammoniummetavanadat entsprechend 100 g $V_2O_5$ versetzt und mit 500 ml 2 Gew.%iger wäßriger Ammoniaklösung und 100 g Monoethanolamin versetzt. Unter intensivem Kneten werden weiterhin nacheinander 60 g Holzschliff, 500 g weitgehend alkalifreier Ton und 300 g Glasfasern (1 - 4 cm Länge) zugesetzt. Die Mischung wird 5 Stunden zu einer homogenen Paste verknetet. Zur Einstellung der für die Verformung geeigneten Plastizität wird weiteres Ammoniakwasser zudosiert. Mit einem Extruder wird die Katalysatormasse dann zu Wabenkörpern mit Kanälen von quadratischem Querschnitt (Zellteilung: 3.3 mm) verpresst.

Nach Trocknung bei ansteigender Temperatur von 20 - 60°C in einer Klimatrockenkammer werden die Formkörper 24 Stunden bei ansteigender Temperatur von 300 - 600° C kalziniert.

In den Beispielen 23 - 25 wurden anstelle von Ammoniummetavanadat entsprechend der in Tabelle 4 angegebenen Mengenverhältnisse in Wasser gelöstes Nioboxalat bzw. Ammoniummolybdat zugesetzt.

Tabelle 4

| Beisp. | Gewichtsverh. $TiO_2/WO_3$ | Kompon. $B_2$ | Anteil $B_2$-Oxid in g/100 g Mischoxid |
|---|---|---|---|
| 22 | 9 : 1 | $V_2O_5$ | 1,0 |
| 23 | 9 : 1 | $Nb_2O_5$ | 1,0 |
| 24 | 9 : 1 | $Mo\ O_3$ | 1,0 |
| 25 | 9 : 1 | $V_2O_5/Mo\ O_3$ | 0,5/0,5 |

Beispiele 26 - 34

Das unter Anspruch 1 genannte Titandioxid wird in einem Knetaggregat nacheinander mit einer wäßrigen Lösung von Ammoniumparawolframat und einer Salzlösung aus der Gruppe der $B_2$-Metalle versetzt.

Als letztere kommen eine Ammoniummetavanadat- oder Ammoniummolybdatlösung, wie in den Beispielen 22 - 25 beschrieben, zum Einsatz. Weiterhin finden eine wäßrige Lösung von Nioboxalat oder eine wäßrige Suspension von Eisenhydroxid Verwendung. Die Konzentration für die Oxide der obengenannten Metalle sind der Tabelle 5 zu entnehmen. Die so erhaltene Knetmischung wird analog zu dem in den Beispielen 22 - 25 beschriebenen Verfahren zu einer extrudierbaren Paste verarbeitet. Diese Paste wird zu Wabenkörpern verpreßt und die Formkörper nach Trocknung bei ansteigender Temperatur von 20 - 60° C in einer Klimatrockenkammer 24 Stunden bei ansteigender Temperatur von 400 - 600° C kalziniert.

## Tabelle 5

| Beisp. | Gewichtsverh. $TiO_2/WO_3$ | Kompon. $B_2$ | Anteil $B_2$-Oxid in $g/100$ g $TiO_2/WO_3$ |
|---|---|---|---|
| 26 | 9 : 1 | $V_2O_5$ | 1,0 |
| 27 | 9 : 1 | $Nb_2O_5$ | 1,0 |
| 28 | 9 : 1 | $Mo\ O_3$ | 1,0 |
| 29 | 9 : 1 | $V_2O_5/Mo\ O_3$ | 0,5/0,5 |
| 30 | 9 : 1 | $Fe_2O_3$ | 1,0 |
| 31 | 9,9 : 0,1 | $V_2O_5$ | 1,0 |
| 32 | 9,5 : 0,5 | $V_2O_5$ | 1,0 |
| 33 | 8 : 2 | $V_2O_5$ | 1,0 |
| 34 | 7 : 3 | $V_2O_5$ | 1,0 |

Ergebnisse

Die entsprechend den Beispielen 1, 2, 26 und 27 präparierten Katalysatoren wurden im Abgas einer Ölfeuerung getestet, welches durch Zudosieren von zusätzlichen Schadstoffgasen ($NO_x$ und $SO_2$) und dem zur Stickoxidreduktion erforderlichen Ammoniak gemäß den unten angegebenen Testbedingungen eingestellt wurde.

Testbedingungen

Abgaszusammensetzung:

$NO_x$  800 Vppm
$NH_3$  800 Vppm
$SO_2$  500 Vppm
$O_2$  5 V%
$H_2O$  11 V%
$CO_2$  12 V%
$N_2$  Rest

Die einzelnen Meßergebnisse, erhalten im Temperaturbereich von 200 - 500° C und bei der Raumgeschwindigkeit 20.000 $h^{-1}$ sind in den Graphiken Fig. 1 und Fig. 2 gezeigt, wobei die zugrundeliegenden Werte den folgenden Tabellen entstammen:

Tabelle zu Fig. 1

| T / °C | Bsp 1 | Bsp 2 | Bsp 26 | Bsp 27 |
|---|---|---|---|---|
| 270 | 90 | 67,5 | 70,7 | 61,0 |
| 300 | 97,5 | 81,0 | 83,2 | 63,5 |
| 320 | 99,5 | 87,5 | 91,0 | - |
| 350 | 99,2 | 91,5 | 94,7 | 88,0 |
| 380 | 99,9 | 90,7 | 95,0 | 94,8 |
| 450 | 99,0 | 81,3 | 91,0 | 95,2 |

| Betriebszeit/h | Bsp 2 | Bsp 26 |
|---|---|---|
| 5 | 90,7 | 95,0 |
| 200 | 86,6 | 91,8 |
| 500 | 86,0 | 91,0 |
| 1000 | 85,0 | 90,2 |
| 2000 | 84,0 | 90,0 |

Vergleichsbeispiel

Ein in Anlehnung an DE-C-24 58 888, Beispiel X - 1, Nr. 5 zu Vergleichszwecken hergestellter Katalysator mit einem Gewichtsverhältnis $TiO_2/WO_3$ von 9 : 1 und einem Anteil $V_2O_5$ pro 100 g $TiO_2/WO_3$ von 1 g, der wie in Beispiel 26 in Form eines extrudierten Wabenkörpers hergestellt und getestet wurde, zeigte insbesondere im Bereich von 300 - 380° C folgende gegenüber Beispiel 26 unterlegene Ergebnisse:

**Patentansprüche**

1. Katalysator zur selektiven Reduktion von Stickstoffoxiden mit Ammoniak aus einem innigen Gemisch von mindestens drei Metallen in Form ihrer Oxide, nämlich

A) Titan als Komponente A,

$B_1$) Wolfram als erste Komponente B und

$B_2$) mindestens einem der Metalle Vanadium, Eisen, Niob, Molybdän, als zweite Komponente B mit einem Atomverhältnis zwischen den Metallen der Komponenten A) und B) von 1 : 0,001 bis 1, vorzugsweise 1 : 0,003 bis 0,3,

**dadurch gekennzeichnet,**

daß die Komponente A) in Form eines durch Flammenhydrolyse von $TiCl_4$ erhältlichen feinteiligen Oxids mit den Eigenschaften

9

| T/°C | $NO_x$ / % |
|------|-----------|
| 270 | 69,3 |
| 300 | 81,7 |
| 320 | 85,0 |
| 350 | 87,8 |
| 380 | 88,8 |
| 450 | 89,5 |

| | | |
|---|---|---|
| BET-Oberfläche | $m^2/g$ | 50 ± 15 |
| mittlere Größe der Primärteilchen | nm | 30 |
| Stampfdichte[1] | g/l | ca. 150 |
| Trocknungsverlust[2] (2 Stunden bei 105°C) | Gew.% | 1,5 |
| Glühverlust[2,4] (2 Stunden bei 1000°C) | Gew.% | 2 |
| pH-Wert[3] (in 4%iger wäßriger Dispersion) | | 3 - 4 |
| Röntgenstruktur | | überwiegend Anatas |
| isoelektrischer Punkt bei pH-Wert | | 6,6 |
| Dichte | $g/cm^3$ | 3,8 |
| $Al_2O_3$[5] | Gew.% | 0,3 |
| $TiO_2$[5] | Gew.% | 99,5 |
| $SiO_2$[5] | Gew.% | 0,2 |
| $Fe_2O_3$[5] | Gew.% | 0,01 |
| HCl[5,6] | Gew.% | 0,3 |

[1] nach DIN 53 194 oder ISO 787/XI
[2] nach DIN 55 921 oder ISO 787/II bzw. ASTM
   D 280 - 33 (Trocknungsverlust) und
   ASTM D 1208 - 65 (Glühverlust)
[3] nach DIN 53 200 oder ISO 787/IX bzw. ASTM
   D 1208 - 65
[4] bez. auf die 2 Stunden bei 105°C getr. Substanz
[5] bez. auf die 2 Stunden bei 1000°C gegl. Substanz
[6] HCl-Gehalt ist Bestandteil des Glühverlustes

vorliegt und der Katalysator erhältlich ist durch Imprägnieren des genannten Titandioxids mit Lösungen von Salzen der Metalle der Gruppe B), Trocknen und Kalzinieren bei 100 - 650, vorzugsweise 300 - 600°C.

2. Katalysator nach Anspruch 1,

**dadurch gekennzeichnet,**

daß er als Überzug auf einem im wesentlichen inerten, strukturell verstärkenden Träger aus Keramik oder Metall aufgebracht ist.

3. Katalysator nach Anspruch 2,

**dadurch erhalten,**

daß zunächst das Titandioxid aus einer wäßrigen Suspension auf dem strukturell verstärkenden Träger abgeschieden, getrocknet und bei 300 - 600° C getempert, dann mit den vereinigten Salzlösungen der Metalle der Komponente B) imprägniert sowie getrocknet und kalziniert ist.

4. Katalysator nach Anspruch 2,

**dadurch erhalten,**

daß zunächst Titandioxid aus einer wäßrigen Suspension auf dem strukturell verstärkenden Träger abgeschieden, getrocknet, bei 300 - 600° C getempert ist und die Imprägnierung mit den Salzlösungen der Metalle der Komponente B) nacheinander unter Zwischentrocknen und gegebenenfalls Zwischentempern vorgenommen ist.

5. Katalysator nach Anspruch 4,

**dadurch erhalten,**

daß das auf dem Träger abgeschiedene und getemperte Titandioxid zuerst mit Wolframsalz und hierauf mit Vanadiumsalz, Eisensalz, Niobsalz, Molybdänsalz, oder einer Kombination der letztgenannten Salze imprägniert ist.

6. Katalysator nach Anspruch 1 oder 2,

**dadurch erhalten,**

daß das Titandioxid in wäßriger Suspension mit den Salzlösungen der Metalle der Komponente B) versetzt und das Gemisch dann sprühgetrocknet und gegebenenfalls nachkalziniert ist.

7. Katalysator nach Anspruch 6,

**dadurch erhalten,**

daß die in sprühgetrockneter und gegebenenfalls nachkalzinierter Form erhaltene Katalysatormasse mit Befeuchtungsmittel, Stützstoff, Bindemittel, Verformungshilfsmittel und gegebenenfalls Porenbildner versetzt, zu einer homogenen Paste verknetet und die Paste zu Formkörpern verpreßt oder extrudiert ist und die Formkörper dann getrocknet und kalziniert sind.

8. Katalysator nach Anspruch 6 oder 7,

**dadurch gekennzeichnet,**

daß das die Komponente A) in Form von Titanoxid und Metalle Komponente B) in Salzform enthaltende Gemisch nach Anspruch 7 zu einer homogenen Paste verknetet, die Paste zu Formkörpern verpreßt oder extrudiert und erst nach Trocknung kalziniert ist.

## Claims

1. Catalyst for the selective reduction of nitrogen oxides with ammonia consisting of an intimate mixture of at least three metals in the form of their oxides, that is,

A) titanium as component A,

$B_1$) tungsten as the first component B and

$B_2$) at least one of the metals vanadium, iron, niobium, molybdenum, as the second component B

having an atomic ratio of the metals of component A) to the metals of component B) of 1 : 0.001 to 1, preferably 1 : 0.003 to 0.3,

characterized in that

component A) is present in the form of a finely divided oxide obtainable by flame hydrolysis of $TiCl_4$ and having the properties

| | | |
|---|---|---|
| BET surface area | m²/g | 50 ± 15 |
| average size of the primary particles | nm | 30 |
| tamped density[1] | g/l | about 150 |
| loss on drying[2] (2 hours at 105°C) | % by weight | 1.5 |
| loss on ignition[2][4] (2 hours at 1000°C) | % by weight | 2 |
| pH[3] (in 4% strength aqueous dispersion) | | 3 - 4 |
| X-ray structure | | predominantly anatase |
| isoelectric point at the pH | | 6.6 |
| density | g/cm³ | 3.8 |
| $Al_2O_3$[5] | % by weight | 0.3 |
| $TiO_2$[5] | % by weight | 99.5 |
| $SiO_2$[5] | % by weight | 0.2 |
| $Fe_2O_3$[5] | % by weight | 0.01 |

1) according to DIN 53 194 or ISO 787/XI

2) according to DIN 55 921 or ISO 787/II or ASTM D 280 - 33 (loss on drying) and ASTM D 1208 - 65 (loss on ignition)

3) according to DIN 53 200 or ISO 787/IX or ASTM D 1208 - 65

4) relative to the substance dried for 2 hours at 105°C

5) relative to the substance ignited for 2 hours at 1000°C

6) HCl percentage is part of the loss of ignition

and the catalyst is obtainable by impregnation of the titanium dioxide mentioned with solutions of salts of the metals of group B), drying and calcination at 100 - 650°C, preferably 300 - 600°C.

2. Catalyst according to Claim 1,
characterized in that
it has been applied as a coating to an essentially inert, structurally reinforcing carrier made of ceramic material or metal.

3. Catalyst according to Claim 2,
obtained by
first depositing the titanium dioxide from an aqueous suspension on the structurally reinforcing carrier, drying and heat treatment at 300 - 600°C, then impregnating with the combined salt solutions of the metals of component B) and also drying and calcining.

4. Catalyst according to Claim 2,
obtained by
depositing titanium dioxide from an aqueous suspension on the structurally reinforcing carrier, drying, heat treatment at 300 - 600°C, and impregnating with the salt solutions of the metals of component B) in succession with drying and, if necessary, heat treatment in between.

5. Catalyst according to Claim 4,
obtained by
impregnating the titanium dioxide which had been deposited on the carrier and heat-treated first with a tungsten salt and then with a vanadium salt, iron salt, niobium salt, molybdenum salt or a combination of the last-mentioned salt.

6. Catalyst according to Claim 1 or 2,
obtained by
adding the salt solutions of the metals of component B) to the titanium dioxide in an aqueous suspension and then spray-drying the mixture and, if necessary, additionally calcining it.

7. Catalyst according to Claim 6,
obtained by
adding humectant, support material, binder, moulding aid and, if necessary, pore-forming agents to the catalyst material obtained in spray-dried and, if necessary, in additionally calcined form, kneading the material to give a homogeneous paste and moulding or extruding the paste to give shaped bodies and then drying and calcining the shaped bodies.

8. Catalyst according to Claim 6 or 7,
characterized in that
the mixture according to Claim 7 containing component A) in the form of titanium dioxide and metals of component B) in salt form is kneaded to give a homogeneous paste, the paste is moulded or extruded to give shaped bodies and is not calcined until after drying.

## Revendications

1. Catalyseur pour la réduction sélective d'oxydes d'azote par l'ammoniac à partir d'un mélange intime d'au moins trois métaux sous forme de leur oxydes, principalement du :

A - Titane comme composant A

$B_1$ - Tungstène comme premier composant B et

$B_2$ - au moins un des métaux Vanadium, Fer, Niobium, Molybdène comme deuxième composant B,

avec un rapport atomique entre les métaux des composants A) et B) de 1 : 0,001 à 1, de préférence 1 : 0,003 à 0,3
caractérisé en ce que
le composant A) se présente sous la forme d'un oxyde en fines particules obtenu par hydrolyse de flamme, de $TiCl_4$ ayant les propriétés :

| | | |
|---|---|---|
| Surface BET | m²/g | 50 ± 15 |
| Taille moyenne des particules primaires | nm | 30 |
| densité après tassage (1) | g/l | env.150 |
| Perte au séchage (2) (2 heures à 105°C) | 1,5 % en poids | |
| Perte à la calcination (2) (4) (2 heures à 1000°C) | 2 % en poids | |
| Valeur du pH (3) (en dispersion aqueuse à 4 %) | 3 à 4 | |
| Structure aux Rayons X | d'une manière prédominante de l'ANATASE | |
| Point isoélectrique pour une valeur de pH de | 6,6 | |
| Densité | en g/cm³ | 3,8 |
| Al₂O₃ (5) | en % en poids | 0,3 |
| TiO₂ (5) | en % en poids | 99,5 |
| SiO₂ (5) | en % en poids | 0,2 |
| Fe₂O₃ (5) | en % en poids | 0,01 |
| ClH (5) (6) | en % en poids | 0,3 |

(1) selon la norme DIN 53 194 ou ISO 787/XI

(2) selon norme DIN 55 921 ou ISO 787/II ou ASTM D 280-33 (perte à la dessication) et ASTM D 1208-65 (perte à la calcination)

(3) selon norme DIN 53-200 ou ISO 787/IX ou ASTM D 1208-65

(4) déterminé sur la substance séchée 2 heures à 105°C

(5) déterminé sur la substance calcinée 2 heures à 1000°C

(6) Teneur en ClH est un constituant de la perte à la calcination

et le catalyseur est obtenu par imprégnation du dioxyde de titane désigné, avec des solutions de sels de métaux du groupe B, séchage et calcination à 100-650°, de préférence 300-600°C.

2. Catalyseur selon la revendication 1,
caractérisé en ce
qu'il est appliqué comme couverture sur un support essentiellement inerte, qui renforce la structure à base de céramique ou de métal.

3. Catalyseur selon la revendication 2,
obtenu en ce que,
en premier lieu l'oxyde de titane est séparé d'une suspension aqueuse sur le support renforçant structurellement, séché et recuit à 300-600°C, puis imprégné avec les solutions réunies de sels de métaux des composants B ainsi que séché et calciné.

4. Catalyseur selon la revendication 2

obtenue en ce que

d'abord le dioxyde de titane est séparé d'une suspension aqueuse sur le support renforçant structurellement, séché, recuit à 300-600°C, et l'imprégnation est entreprise avec les solutions de sels des métaux des composants B) l'une après l'autre avec séchage intermédiaire et éventuellement recuit intermédiaire.

5. Catalyseur selon la revendication 4

obtenu en ce que

le dioxyde de titane séparé sur le support et recuit, est imprégé en premier lieu par un sel de tungstène, et ensuite avec un sel de vanadium, un sel de fer et un sel de niobium, un sel de molybdène ou une combinaison des sels mentionnés en dernier.

6. Catalyseur selon la revendication 1 ou 2

obtenu en ce que

le dioxyde de titane en suspension aqueuse est mélangé avec les solutions de sels des métaux des composants B) et le mélange est ensuite séché par pulvérisation et le cas échéant, post-calciné.

7. Catalyseur selon la revendication 6

obtenu en ce que

la masse du catalyseur obtenue sous forme séché par pulvérisation et le cas échéant post-calciné, est mélangée avec un agent d'humidification, une substance d'appyuante, un agent liant, un agent adjuvant de déformation et éventuellement un agent formant des pores, puis malaxé en une pâte homogène et la pâte est pressée en des corps de moulage ou est extrudée, et les corps de moulage sont ensuite séchées et calcinés.

8. Catalyseur selon la revendication 6 ou 7

caractérisé en ce que

le mélange contenant le composant A) sous forme d'oxyde de titane et des métaux du composant B) sous forme de sels, selon la revendication 7 est malaxé en une pâte homogène, la pâte est pressée en corps de moulage ou extrudée et en premier lieu après séchage, est calcinée.

**FIG. 1** $\eta_{NO_x}$ VERSCHIEDENER KATALYSATOREN ALS FUNKTION DER TEMPERATUR

○ BEISPIEL 1   □ BEISPIEL 26
△ BEISPIEL 2   ◇ BEISPIEL 27
× VERGLEICHS-KATALYSATOR

$\eta_{NO_x}$ (%)

TEMPERATUR (°C)

EP 0 317 875 B1

FIG. 2 $\eta_{NO_x}$ VERSCHIEDENER KATALYSATOREN ALS FUNKTION DER BETRIEBSZEIT BEI 380°C

□ BEISPIEL 26

△ BEISPIEL 2

17